# EUROPEAN PATENT SPECIFICATION

(11) **EP 4 395 037 B1**
(45) Date of publication and mention of the grant of the patent: **28.01.2026**
(21) Application number: 22895888.0
(22) Date of filing: 26.10.2022
(51) Int. Cl.: H01M 50/342, H01M 50/105, H01M 50/178, H01M 50/211

(54) **SECONDARY BATTERY AND BATTERY MODULE INCLUDING THE SAME**
SEKUNDÄRBATTERIE UND BATTERIEMODUL DAMIT
BATTERIE SECONDAIRE ET MODULE DE BATTERIE LA COMPRENANT

(30) Priority: 19.11.2021 KR 20210159972
(43) Date of publication of application: 03.07.2024
(73) Proprietor: LG Energy Solution, Ltd., Seoul 07335 (KR)
(72) Inventor: CHOI, Giyoung, Daejeon 34122 (KR); LEE, Suhang, Daejeon 34122 (KR); KIM, Yongil, Daejeon 34122 (KR); NOH, Yuhan, Daejeon 34122 (KR); KIM, Dongwook, Daejeon 34122 (KR); KWON, Yonghwan, Daejeon 34122 (KR)
(74) Representative: Plasseraud IP
(86) International application number: PCT/KR2022/016497
(87) International publication number: WO 2023/090680

(56) References cited:
- EP-A2- 2 549 561
- KR-A- 20150 062 688
- KR-A- 20160 129 539
- KR-A- 20170 055 113
- KR-A- 20170 103 192
- KR-B1- 101 264 527
- US-A1- 2019 181 505
- US-A1- 2020 381 678

## Description

### [Technical Field]

The present invention relates to a secondary battery and a battery module including the same, and more particularly, to a pouch-type secondary battery with improved safety, and a battery module including the same.

### [Background Art]

As development of technologies and demands for mobile devices are increased, there is a rapidly increasing demand for rechargeable batteries as energy sources. Therefore, many studies are being conducted on the rechargeable batteries in order to meet various needs.

The rechargeable battery is attracting lots of interest as an energy source for a power device such as an electric bicycle, an electric vehicle, and a hybrid electric vehicle as well as a mobile device such as a mobile phone, a digital camera, and a notebook computer.

A small-sized battery pack, in which one battery cell is packed, is used for a small-sized device such as a mobile phone or a camera. However, a middle-sized or large-sized battery pack, in which two or more battery cells are packed and connected in parallel and/or in series, is used for a middle-sized or large-sized device such as a notebook computer or an electric vehicle.

Regarding a shape of the secondary battery, there is a high demand for an angular or pouch-type secondary battery that may have a small thickness and be applied to products such as mobile phones. The angular lithium secondary battery is advantageous in protecting an electrode assembly from external impact, and it is easy to inject a liquid into the angular lithium secondary battery. However, because a shape of the angular lithium secondary battery is fixed, which makes it difficult to reduce a volume. However, because the pouch-type lithium secondary battery is not restricted in shape and size, the pouch-type lithium secondary battery is suitable for manufacturing a cell with a small thickness and is easily assembled by means of thermal bonding. Further, the pouch-type lithium secondary battery provides an effect of discharging gas or a liquid in the event of an abnormal motion, which provides high safety.

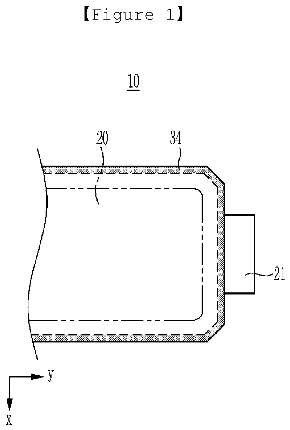

However, an electrolyte in the pouch-type secondary battery may be decomposed because of causes such as overcharging, exposure to high temperature, an internal short circuit, and the like. For this reason, a large amount of gas may be produced, or internal pressure may increase because of internal ignition. FIG. 1 is a view illustrating an electrode lead part of a pouch-type secondary battery in the related art. As illustrated in FIG. 1, in a secondary battery 10 in the related art, a lead part 21 extending from an electrode assembly 20 protrudes to the outside of a pouch-type casing, and a sealing part 34 is formed along an edge of the pouch-type casing. In this case, the sealing part 34 is formed uniformly over the entire edge. Further, the sealing part 34 is formed in a symmetric shape with respect to the lead part 21. In this case, in case that internal pressure increases, the entire battery may be rapidly surrounded by flame. In particular, venting often occurs at a portion corresponding to the lead part 21. There is a problem in that the entire battery is more rapidly surrounded by flame in case that venting occurs at the lead part 21 as described above. Accordingly, there is a need to delay heat propagation by appropriately controlling gas or flame even though the gas or flame is created in the battery.

Examples of pouch-type secondary batteries are disclosed in documents EP 2549561 A1 and US 2020/381678 A1.

### [Disclosure]

### [Technical Problem]

The present invention has been made in an effort to provide a secondary battery capable of preventing explosion by safely discharging gas in an intended direction even though a large amount of gas is generated in a pouch-type secondary battery.

However, the object to be achieved by the embodiments of the present invention is not limited to the above-mentioned object but may be variously expanded without departing from the present invention.

### [Technical Solution]

To this end, the invention relates to a secondary battery according to claim 1.

The secondary mattery after the invention may present one or more feature(s) of dependent claims 2 to 7, in any combination allowed by the claims.
The invention also relates to a battery module according to claim 8 or 9.

### [Advantageous Effects]

According to the embodiments, it is possible to prevent explosion by safely guiding and discharging gas in the intended direction even though a large amount of gas is generated in the pouch-type secondary battery, thereby providing the secondary battery with improved safety.

### [Description of the Drawings]

FIG. 1 is a view illustrating an electrode lead part of a pouch-type secondary battery in the related art.
FIG. 2 is an exploded perspective view illustrating a secondary battery according to an embodiment of the present invention.
FIG. 3 is a view illustrating a state in which the secondary battery in FIG. 1 is assembled.
FIG. 4 is a view illustrating one electrode lead part in FIG. 3.
FIG. 5 is a view illustrating a secondary battery according to a first modified example of the present invention.
FIG. 6 is a view illustrating a secondary battery according to a second modified example of the present invention.
FIG. 7 is a view illustrating a secondary battery according to a third modified example of the present invention.
FIG. 8 is a view for explaining a state in which the secondary batteries according to the examples of the present invention and the secondary batteries according to the comparative examples are tested.

### [Mode for Invention]

Hereinafter, several exemplary embodiments of the present invention will be described in detail with reference to the accompanying drawings so that those with ordinary skill in the art to which the present invention pertains may easily carry out the exemplary embodiments. The present invention may be implemented in various different ways and is not limited to the embodiments described herein.

A part irrelevant to the description will be omitted to clearly describe the present invention, and the same or similar constituent elements will be designated by the same reference numerals throughout the specification.

In addition, a size and thickness of each constituent element illustrated in the drawings are arbitrarily shown for convenience of description, but the present invention is not limited thereto. In order to clearly describe several layers and regions, thicknesses thereof are enlarged in the drawings. In the drawings, the thicknesses of some layers and regions are exaggerated for convenience of description.

In addition, when one component such as a layer, a film, a region, or a plate is described as being positioned "above" or "on" another component, one component can be positioned "directly on" another component, and one component can also be positioned on another component with other components interposed therebetween. On the contrary, when one component is described as being positioned "directly on" another component, there is no component therebetween. In addition, when a component is described as being positioned "above" or "on" a reference part, the component may be positioned "above" or "below" the reference part, and this configuration does not necessarily mean that the component is positioned "above" or "on" the reference part in a direction opposite to gravity.

Throughout the specification, unless explicitly described to the contrary, the word "comprise/include" and variations such as "comprises/includes" or "comprising/including" will be understood to imply the inclusion of stated elements, not the exclusion of any other elements.

Throughout the specification, the word "in a plan view" means when an object is viewed from above, and the word "in a cross-sectional view" means when a cross section made by vertically cutting an object is viewed from a lateral side.

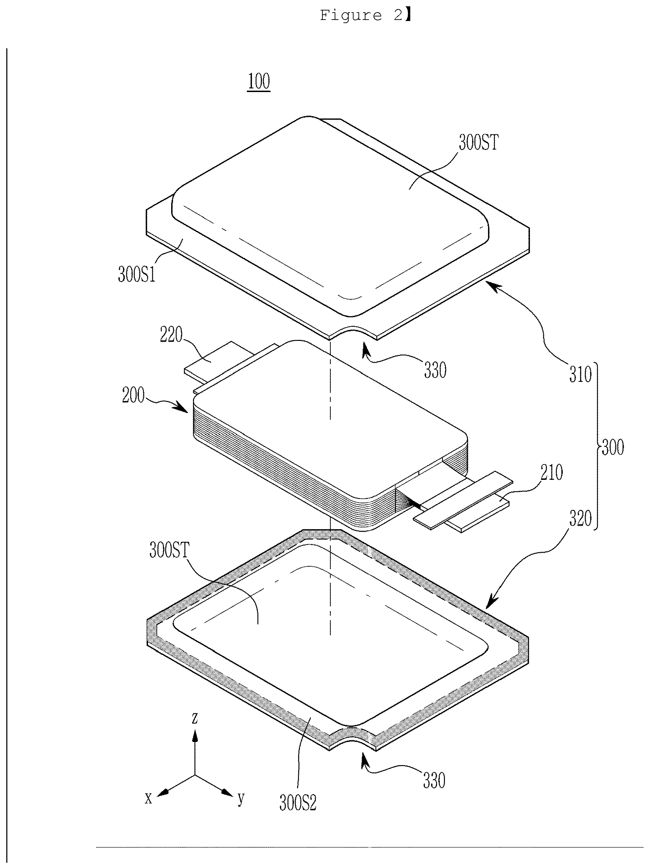

Hereinafter, a secondary battery according to an embodiment of the present invention will be described with reference to FIGS. 2 to 4.

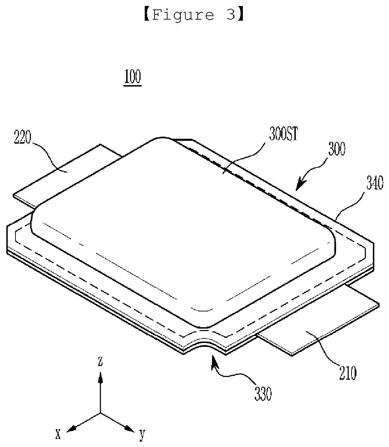

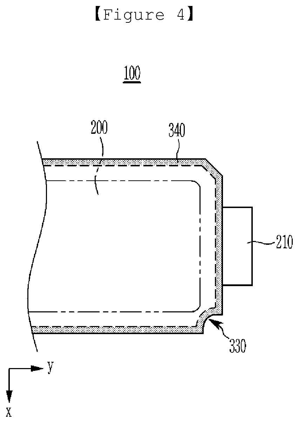

FIG. 2 is an exploded perspective view illustrating a secondary battery according to an embodiment of the present invention, FIG. 3 is a view illustrating a state in which the secondary battery in FIG. 1 is assembled, and FIG. 4 is a view illustrating one electrode lead part in FIG. 3.

Referring to FIGS. 2 to 4, a secondary battery 100 according to an embodiment of the present invention includes an electrode assembly 200 and a pouch-type casing 300 configured to accommodate the electrode assembly 200. The pouch-type casing 300 includes an upper casing 310 and a lower casing 320. FIG. 2 illustrates that the upper casing 310 and the lower casing 320 are formed to be separated. However, the upper casing 310 and the lower casing 320 may be integrated by being connected to each other. The shape of the pouch-type casing 300 is not limited to the shape illustrated in FIG. 2. Any shape capable of accommodating and sealing the electrode assembly 200 may be applied.

The electrode assembly 200 may be provided in the form in which a positive plate and a negative plate are disposed with a separator interposed therebetween. In this case, the electrode assembly 200 may have a structure in which one positive plate and one negative plate are wound with a separator interposed therebetween or a structure in which a plurality of positive plates and a plurality of negative plates are stacked with separators interposed therebetween. The positive plate and the negative plate may each have a structure in which an electrode current collector is coated with active material slurry. The slurry may be typically formed by stirring an active material, a conductive material, a binder, and a plasticizer in a state in which a solvent is added.

The electrode plate of the electrode assembly 200 may have a non-coated portion on which no slurry is applied. An electrode tab, which corresponds to the electrode plate, may be formed on the non-coated portion. That is, the plurality of positive electrodes and the plurality of negative electrodes included in the electrode assembly 200 respectively include positive electrode tabs and negative electrode tabs, and electrode leads 210 and 220 are connected to the electrode assembly 200. Specifically, the electrode leads 210 and 220 include a positive electrode lead 210 and a negative electrode lead 220. The electrode leads 210 and 220 connected to the electrode assembly 200 protrude from two opposite ends of the pouch-type casing 300 and are exposed to the outside of the pouch-type casing 300. Meanwhile, in the present embodiment, the positive electrode lead 210 and the negative electrode lead 220 protrude in opposite directions. However, the protruding direction is not particularly limited. That is, the positive electrode lead 210 and the negative electrode lead 220 may be exposed together in the same direction from one side of the secondary battery 100.

The pouch-type casing 300 includes the upper casing 310 and the lower casing 320 that are thermally bonded to each other. Although not specifically illustrated, the pouch-type casing 300 including the upper casing 310 and the lower casing 320 may be a laminated sheet including a resin layer and a metal layer. Specifically, the upper casing 310 and the lower casing 320 may each include an inner resin layer for sealing, a metal layer configured to prevent penetration of a material, and an outer resin layer disposed at a outermost side.

The outer resin layer may have tensile strength excellent with respect to a thickness and have weather resistance and electrical insulation to protect the secondary battery 100 from the outside. The outer resin layer may include polyethylene terephthalate (PET) resin or nylon resin. The metal layer may prevent air, moisture, or the like from being introduced into the secondary battery 100. The metal layer may include aluminum (Al). The inner resin layers may be thermally bonded by heat and pressure applied thereto in a state in which the electrode assembly 200 is embedded. The inner resin layer may include thermoplastic resin such as casted polypropylene (CPP) or polypropylene (PP).

The upper casing 310 and the lower casing 320 may each have an accommodation part 300ST having a concave shape on which the electrode assembly 200 may be seated. The upper casing 310 and the lower casing 320 may respectively include rim portions 300S1 and 300S2 provided along outer edges of the accommodation parts 300ST. The rim portions 300S1 and 300S2 may each include a region in which a sealing part 340 is formed. The regions corresponding to the sealing part 340 are thermally bonded in a state in which the rim portion 300S1 of the upper casing 310 and the rim portion 300S2 of the lower casing 320 are in contact with each other, such that the sealing part 340 may be formed, and the pouch-type casing 300 may be sealed.

The sealing part 340 includes a notch portion 330 formed at any one end of the side of the pouch-type casing 300 from which the electrode leads 210 and 220 protrude outward. The notch portion 330 has a shape recessed toward the inside of the pouch-type casing 300. That is, as illustrated in FIGS. 2 to 4, the notch portion 330 has a shape having a curvature which is recessed toward the inside of the pouch-type casing 300.

The notch portion 330 is formed only at any one end of the side from which the electrode leads 210 and 220 protrude but not formed at the opposite end of the other of the sides from which the electrode leads 210 and 220 protrude. For example, in FIG. 4, one side of the pouch-type casing 300 from which the electrode lead 210 protrudes is parallel to an x-axis direction. In this case, the notch portion 330 is formed at an end based on a + direction of the x-axis direction, i.e., a lower end in the drawing, but the notch portion 330 is not formed at an end based on a - direction of the x-axis direction, i.e., an upper end in the drawing. With the above-mentioned structure, in case that ignition occurs in the pouch-type casing 300, a temperature is raised, and gas is produced, the notch portion 330 may allow the ignition and gas to be vented before the sealing part 340 at the sides of the electrode leads 210 and 220 is damaged by pressure. That is, in case that the notch portion 330 is not formed, it is difficult to predict a position at which ignition and gas are vented. In particular, the portions where the electrode leads 210 and 220 are disposed may be somewhat weaker in sealing than the other portions. For this reason, in case that flame is vented through these portions, the other components connected adjacent to the electrode leads 210 and 220 are rapidly surrounded by the flame, and the entire secondary battery 100 and an entire battery module including the secondary battery 100 may be surrounded by the flame. However, in the present embodiment, the notch portion 330 is formed at only one side based on the positions at which the electrode leads 210 and 220 are formed, which makes it possible to guide the venting of the flame and gas to the particular position at which the notch portion 330 is formed, thereby delaying the heat propagation.

As illustrated in FIGS. 2 to 4, the shape of the notch portion 330 recessed inward and having a curvature may induce the above-mentioned effect. That is, it is difficult to guide the venting of the flame and gas only by forming a steeper inclination of the edge portion or deforming the edge portion so that the edge portion is smaller in width than other portions of the sealing part 340. In this case, a radius of curvature of the notch portion 330 may be 2 mm or less. In case that the radius of curvature is larger than 2 mm, the notch portion 330 is not sufficiently formed, and the venting may occur at a portion other than the notch portion 330. In addition, a width of the notch portion 330 may be equal to or smaller than a width of another portion of the sealing part 340, i.e., a width of the remaining portion of the sealing part 340 except for the notch portion 330. Further, the shape of the notch portion 330 is a shape made as the sealing part 340 extending along the edge of the pouch-type casing 300 is recessed inward. The notch portion 330 may be recessed to have an approximately right-angled shape, and a radius of curvature of a vertex portion of the right-angled shape may be 2 mm or less. That is, for example, in FIG. 4, the notch portion may have an approximately right-angled shape extending inward in a - direction of the y-axis and then extending in the + direction of the x-axis. A vertex portion, which is an innermost side, may be formed in a curved shape having a radius of curvature of 2 mm or less. Further, in this shape, a length of the portion extending inward along the axis may be about 7 mm or more and about 13 mm or less, but the present invention is not limited thereto. The length may be appropriately modified depending on widths and shapes of the sealing part 340 and the rim portions 300S1 and 300S2.

As described above, the notch portion 330, which has a curvature which is recessed toward the inside of the pouch-type casing 300, is provided only at any one end of the side from which the electrode leads 210 and 220 protrude, such that the venting is induced to be performed through the notch portion 330 in case that gas is generated in the pouch-type casing 300 or pressure is raised by internal ignition. Therefore, it is possible to prevent rapid propagation of flame and delay heat propagation.

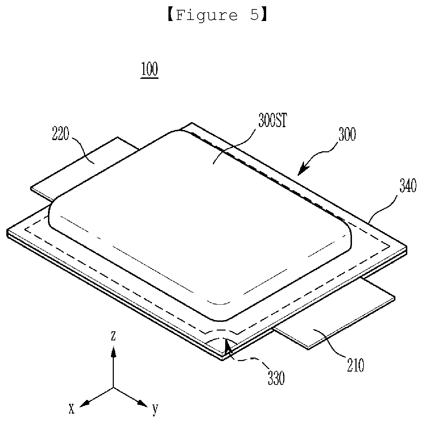

Next, first to third modified examples of the embodiment of the present invention will be described with reference to FIGS. 5 to 7.

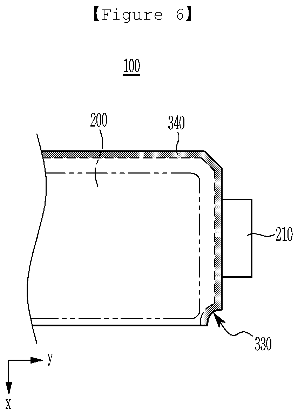

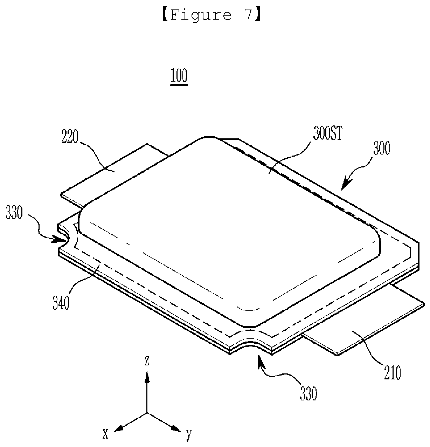

FIG. 5 is a view illustrating a secondary battery according to a first modified example of the present invention, FIG. 6 is a view illustrating a secondary battery according to a second modified example of the present invention, and FIG. 7 is a view illustrating a secondary battery according to a third modified example of the present invention.

Referring to FIG. 5, in the case of the secondary battery according to the first modified example of the present invention, an edge portion of the pouch-type casing 300, where the notch portion 330 is formed, may not be cut along the shape of the notch portion 330. That is, the sealing part 340 is completely formed by a sealing process using thermal bonding, and the thermal bonding is performed along the shape of the notch portion 330, such that the notch portion 330 may be formed in the sealing part 340. Therefore, the remaining portion of the pouch-type casing 300, which is not subjected to the thermal bonding, remains without any change. That is, the shape of the notch portion 330 is a part of the shape of the sealing part 340 obtained by the thermal bonding instead of being obtained by deformation such as cutting or tearing. Therefore, it is possible to simply provide the notch portion 330 without an additional forming process.

Referring to FIG. 6, the secondary battery according to the second modified example of the present invention has a configuration in which the upper casing 310 and the lower casing 320 of the pouch-type casing 300 are connected to each other instead of a configuration in which the upper casing 310 and the lower casing 320 of the pouch-type casing 300 are separated from each other. That is, the pouch-type casing 300 may be completely formed by folding any one of the upper casing 310 and the lower casing 320. In this case, the folded portions may be sealed without the sealing part 340, such that the sealing part 340 is formed along the three sides of the pouch-type casing 300, as illustrated in FIG. 6. Therefore, the notch portion 330 may be formed adjacent to a folding line (a line constituting a lowermost side in FIG. 6). In this case, as illustrated in FIG. 6, an end of the notch portion 330, which is positioned to be distant from the electrode lead 210, may be formed to be in contact with the folding line.

Referring to FIG. 7, the secondary battery according to the third modified example of the present invention may include the notch portions 330 disposed at two opposite ends based on the longitudinal direction of the secondary battery 100. That is, the notch portions 330 may be respectively provided at the two opposite ends from which the electrode leads 210 and 220 protrude. Even in this case, the notch portions 330 may be formed only at one side based on the electrode leads 210 and 220, thereby controlling venting positions. For example, in FIG. 7, the notch portions 330 may be formed only at the edges based on the + direction of the x-axis. With the above-mentioned configuration, the portions where the notch portions 330 are formed are disposed in a lump at the lower side in case that the battery module is configured by standing and stacking the plurality of secondary batteries 100, such that the venting direction is controlled toward the lower side of the module in the event of thermal runaway. Therefore, it is possible to prevent rapid propagation of flame and delay heat propagation.

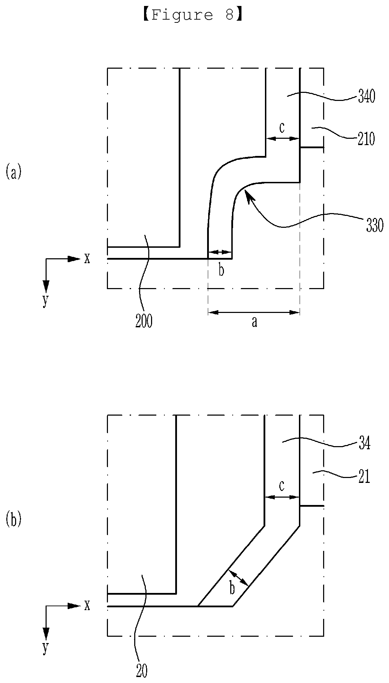

Next, results of testing the effect of guiding venting in accordance with the shapes of the notch portions will be described with reference to FIG. 8.

FIGS. 8(a) and 8(b) are views for explaining states of the secondary batteries according to the examples of the present invention and the secondary batteries according to the comparative examples when tested.

In FIGS. 8(a) and 8(b), all the edge portions are formed according to the second modified example, i.e., the example illustrated in FIG. 6.

As illustrated in FIG. 8(a), in the examples, the notch portions 330 were designed to have radii of curvature, and tests were performed while differently setting widths a, b, and c of the respective parts. Further, as illustrated in FIG. 8(b), in the comparative examples, the sealing part 34 was formed to be inclined at the edge portion adjacent to the electrode lead 21. In this case, test were performed while changing a width (b) of the inclined portion.

In the examples and the comparative examples, it was determined that the test passed in case that the venting occurred first at the notch portion 330 or the position corresponding to the notch portion 330 when the temperature in the secondary battery was raised and the internal pressure was raised. Further, it was determined that the test failed in case that the venting occurred first at another position such as the position corresponding to the electrode lead instead of the notch portion 330 or the position corresponding to the notch portion 330. Table 1 shows the dimensions of the respective parts, the pressure during the venting, and test results in the examples and the comparative examples.

**[Table 1]**

| | a (mm) | b (mm) | c (mm) | Radius of curvature (mm) | Pressure (bar) during venting | Test result |
|---|---|---|---|---|---|---|
| Example 1 | 11.0 | 2.0 | 4.0 | 2.0 | 5.04 | Passed |
| Example 2 | 9.6 | 2.0 | 4.0 | 2.0 | 5.31 | Passed |
| Example 3 | 8.0 | 2.0 | 4.0 | 2.0 | 6.21 | Passed |
| Example 4 | 8.7 | 2.7 | 4.0 | 2.0 | 6.50 | Passed |
| Comparative Example 1 | - | 2.67 | 4.0 | - | - | Failed |
| Comparative Example 2 | - | 2.0 | 4.0 | - | - | Failed |

As shown in Table 1, in Examples 1 to 4, it was ascertained that in case that the notch portion 330 having a curvature was formed, the venting occurred through the notch portion 330 first before the venting occurred at the other parts regardless of the widths of the sealing part and the notch portion. In contrast, in the case of Comparative Examples 1 and 2, it was ascertained that the effect of guiding the venting was not obtained because the venting occurred first at the other parts before the venting occurred at the corresponding parts even though the corresponding part was deformed so that the width (b) of the corresponding part was smaller than the width (c) of the sealing part 34 in order to guide the venting to the edge portion (inclined portion).

Meanwhile, the plurality of pouch-type secondary batteries according to the embodiment of the present invention may be collected and constitute the battery module. In this case, in the battery module, the notch portions included in the secondary battery are aligned and disposed in the same direction (e.g., at the lower side of the battery module), such that the venting direction may be controlled to a predetermined direction in the event of thermal runaway. Therefore, it is possible to prevent rapid propagation of flame and delay heat propagation.

Further, one or more battery modules may be packaged in a pack casing and constitute a battery pack.

The above-mentioned battery module and the battery pack including the battery module may be applied to various devices. Examples of such devices may include transportation means such as an electric bicycle, an electric vehicle, and a hybrid vehicle, but the present invention is not limited thereto, and may be applied to various devices that may use the battery module and the battery pack including the battery module. These configurations may also belong to the scope of the present invention.

### <Description of Reference Numerals>

100: Secondary battery
200: Electrode assembly
300: Pouch-type casing
330: Notch portion
340: Sealing part

## Claims

1. A secondary battery (100) comprising:
an electrode assembly (200); and
a pouch-type casing (300) in which the electrode assembly (200) is embedded, the pouch-type casing (300) comprising upper (310) and lower (320) casings thermally bonded to each other,
wherein the pouch-type casing (300) comprises a sealing part (340) formed along at least a part of an edge of the pouch-type casing (300) and formed by thermally bonding the upper (310) and lower (320) casings,
wherein electrode leads (210, 220) connected to the electrode assembly (200) protrude from sides of the pouch-type casing (300),
wherein the sealing part (340) comprises a notch portion (330) formed at any one end of the side from which the electrode leads (210, 220) protrude,
and wherein the notch portion (330) has a curvature which is recessed toward the inside of the pouch-type casing (300),
**characterized in that** the notch portion (330) is not formed at another end of the side from which the electrode leads (210, 220) protrude, positioned opposite to the end at which the notch portion (300) is formed, with the electrode lead (210, 220) interposed therebetween.

2. The secondary battery (100) of claim 1, wherein:
a width of the notch portion (330) is equal to or smaller than a width of another portion of the sealing part (340), except for the notch portion (330).

3. The secondary battery (100) of claim 1, wherein:
the electrode leads (210, 220) protrude from two opposite sides based on a longitudinal direction of the pouch-type casing (300).

4. The secondary battery (100) of claim 3, wherein:
notch portions (330) are respectively provided at the two opposite sides from which the electrode leads (210, 220) protrude, and the notch portions (330) are respectively provided at ends in the same direction based on the electrode leads (210, 220).

5. The secondary battery (100) of claim 1, wherein:
a radius of curvature of the notch portion (330) is 2 mm or less.

6. The secondary battery (100) of claim 1, wherein:
a portion where the upper casing (310) and the lower casing (320) are not thermally bonded is disposed between the notch portion (330) and an edge of the pouch-type casing (300).

7. The secondary battery (100) of claim 1, wherein:
the upper casing (310) and the lower casing (320) are integrated with a folding line interposed therebetween, and
the notch portion (330) is disposed adjacent to the folding line.

8. A battery module comprising a plurality of secondary batteries (100) according to claim 1.

9. The battery module of claim 9, wherein:
all the notch portions (330) of the plurality of secondary batteries (100) are arranged towards the same direction.

## Patentansprüche

1. Sekundärbatterie (100), umfassend:
eine Elektrodenanordnung (200); und
ein beutelartiges Gehäuse (300), in welchem die Elektrodenanordnung (200) eingebettet ist, wobei das beutelartige Gehäuse (300) ein oberes (310) und ein unteres (320) Gehäuse umfasst, welche thermisch miteinander verbunden sind,
wobei das beutelartige Gehäuse (300) einen Dichtungsteil (340) umfasst, welcher entlang wenigstens eines Teils eines Randes des beutelartigen Gehäuses (300) gebildet ist und durch thermisches Verbinden des oberen (310) und des unteren (320) Gehäuses gebildet ist,
wobei Elektrodenleitungen (210, 220), welche mit der Elektrodenanordnung (200) verbunden sind, von Seiten des beutelartigen Gehäuses (300) hervorstehen,
wobei der Dichtungsteil (340) einen Kerbenabschnitt (330) umfasst, welcher an einem Ende der Seite gebildet ist, von welcher die Elektrodenleitungen (210, 220) hervorstehen,
und wobei der Kerbenabschnitt (330) eine Krümmung aufweist, welche zu der Innenseite des beutelartigen Gehäuses (300) hin vertieft ist,
**dadurch gekennzeichnet, dass**
der Kerbenabschnitt (330) nicht an einem anderen Ende der Seite gebildet ist, von welcher die Elektrodenleitungen (210, 220) hervorstehen, entgegengesetzt positioniert zu dem Ende, an welchem der Kerbenabschnitt (330) gebildet ist, wobei die Elektrodenleitung (210, 220) dazwischen angeordnet ist.

2. Sekundärbatterie (100) nach Anspruch 1, wobei:
eine Breite des Kerbenabschnitts (330) gleich wie oder kleiner als eine Breite eines anderen Abschnitts des Dichtungsteils (340) ist, mit Ausnahme des Kerbenabschnitts (330).

3. Sekundärbatterie (100) nach Anspruch 1, wobei:
die Elektrodenleitungen (210, 220) basierend auf einer longitudinalen Richtung des beutelartigen Gehäuses (300) von zwei entgegengesetzten Seiten hervorstehen.

4. Sekundärbatterie (100) nach Anspruch 3, wobei:
Kerbenabschnitte (330) jeweils an den beiden entgegengesetzten Seiten bereitgestellt sind, von welchen die Elektrodenleitungen (210, 220) hervorstehen,
und wobei die Kerbenabschnitte (330) basierend auf den Elektrodenleitungen (210, 220) jeweils an Enden in der gleichen Richtung bereitgestellt sind.

5. Sekundärbatterie (100) nach Anspruch 1, wobei:
ein Krümmungsradius des Kerbenabschnitts (330) 2 mm oder kleiner ist.

6. Sekundärbatterie (100) nach Anspruch 1, wobei:
ein Abschnitt, in welchem das obere Gehäuse (310) und das untere Gehäuse (320) nicht thermisch verbunden sind, zwischen dem Kerbenabschnitt (330) und einem Rand des beutelartigen Gehäuses (300) angeordnet ist.

7. Sekundärbatterie (100) nach Anspruch 1, wobei:
das obere Gehäuse (310) und das untere Gehäuse (320) mit einer dazwischen eingefügten Faltlinie integriert sind, und
der Kerbenabschnitt (330) benachbart zu der Faltlinie angeordnet ist.

8. Batteriemodul umfassend eine Mehrzahl von Sekundärbatterien (100) gemäß Anspruch 1.

9. Batteriemodul nach Anspruch 9, wobei:
alle Kerbenabschnitte (330) der Mehrzahl von Sekundärbatterien (100) in der gleichen Richtung angeordnet sind.

## Revendications

1. Batterie secondaire (100) comprenant :
un ensemble d'électrodes (200) ; et
un boîtier de type poche (300) dans lequel l'ensemble d'électrodes (200) est intégré, le boîtier de type poche (300) comprenant des boîtiers supérieur (310) et inférieur (320) thermiquement liés l'un à l'autre,
dans laquelle le boîtier de type poche (300) comprend une partie d'étanchéité (340) formée le long d'au moins une partie d'un bord du boîtier de type poche (300) et formée par liaison thermique des boîtiers supérieur (310) et inférieur (320),
dans laquelle des languettes d'électrode (210, 220) connectées à l'ensemble d'électrodes (200) font saillie depuis des côtés du boîtier de type poche (300),
dans laquelle la partie d'étanchéité (340) comprend une partie d'encoche (330) formée à une extrémité quelconque du côté à partir duquel les languettes d'électrode (210, 220) font saillie,
et dans laquelle la partie d'encoche (330) présente une courbure qui est en retrait vers l'intérieur du boîtier de type poche (300),
**caractérisée en ce que** la partie d'encoche (330) n'est pas formée à une autre extrémité du côté à partir duquel les languettes d'électrode (210, 220) font saillie, positionnée à l'opposé de l'extrémité au niveau de laquelle la partie d'encoche (300) est formée, avec la languette d'électrode (210, 220) interposée entre celles-ci.

2. Batterie secondaire (100) selon la revendication 1, dans laquelle :
la largeur de la partie d'encoche (330) est égale ou inférieure à une largeur d'une autre partie de la partie d'étanchéité (340), à l'exception de la partie d'encoche (330).

3. Batterie secondaire (100) selon la revendication 1, dans laquelle :
les languettes d'électrode (210, 220) font saillie depuis deux côtés opposés sur la base d'une direction longitudinale du boîtier de type poche (300).

4. Batterie secondaire (100) selon la revendication 3, dans laquelle :
des parties d'encoche (330) sont respectivement agencées sur les deux côtés opposés à partir desquels les languettes d'électrode (210, 220) font saillie, et les parties d'encoche (330) sont respectivement agencées aux extrémités dans la même direction sur la base des languettes d'électrode (210, 220).

5. Batterie secondaire (100) selon la revendication 1, dans laquelle :
un rayon de courbure de la partie d'encoche (330) est de 2 mm ou moins.

6. Batterie secondaire (100) selon la revendication 1, dans laquelle :
une partie où le boîtier supérieur (310) et le boîtier inférieur (320) ne sont pas liés thermiquement est disposée entre la partie d'encoche (330) et un bord du boîtier de type poche (300).

7. Batterie secondaire (100) selon la revendication 1, dans laquelle :
le boîtier supérieur (310) et le boîtier inférieur (320) sont intégrés avec une ligne de pliage interposée entre ceux-ci, et
la partie d'encoche (330) est disposée à proximité adjacente de la ligne de pliage.

8. Module de batteries comprenant une pluralité de batteries secondaires (100) selon la revendication 1.

9. Module de batteries selon la revendication 9, dans lequel :
toutes les parties d'encoche (330) de la pluralité de batteries secondaires (100) sont agencées selon la même direction.
